# EUROPÄISCHE PATENTSCHRIFT

(11) **EP 1 814 748 B1**
(45) Veröffentlichungstag und Bekanntmachung des Hinweises auf die Patenterteilung: **30.03.2011**
(21) Anmeldenummer: 05802559.4
(22) Anmeldetag: 04.11.2005
(51) Int. Cl.: B60G 21/055

(54) **VERFAHREN ZUM HERSTELLEN VON GETEILTEN ROHRSTABILISATOREN MIT SCHWENKMOTOR**
METHOD FOR PRODUCING DIVIDED TUBULAR STABILIZERS WITH AN OSCILLATING MOTOR
PROCEDE DE PRODUCTION DE STABILISATEURS TUBULAIRES A MOTEUR PIVOTANT DIVISES

(30) Priorität: 27.11.2004 DE 102004057429
(43) Veröffentlichungstag der Anmeldung: 08.08.2007
(73) Patentinhaber: ThyssenKrupp Bilstein Suspension GmbH, 58256 Ennepetal (DE)
(72) Erfinder: DZIEMBALLA, Hans, 58642 Iserlohn (DE); MANKE, Lutz, 58097 Hagen (DE); SCHNEIDER, Frank, 44229 Dortmund (DE)
(74) Vertreter: Adams, Steffen
(86) Internationale Anmeldenummer: PCT/EP2005/011813
(87) Internationale Veröffentlichungsnummer: WO 2006/056307

(56) Entgegenhaltungen:
- DE-C1- 19 853 798
- US-B1- 6 435 531

## Beschreibung

Die Erfindung betrifft ein Verfahren zum Herstellen eines geteilten Rohrstabilisators mit einem zwei Rohrstabilisatorhälften miteinander koppelnden Schwenkmotor gemäß dem Oberbegriff des Patentanspruchs 1.

Derartige geteilte Rohrstabilisatoren werden in Kraftfahrzeugen eingesetzt, um Wankbewegungen des Fahrzeugaufbaus entgegenwirken zu können. Der Schwenkmotor, welcher die Rohrstabilisatorhälften miteinander koppelt, dient dazu, die beiden Rohrstabilisatorhälften gegeneinander zu verschränken und so auf die beiden Räder einer Achse unterschiedliche Kräfte zu übertragen, so dass einer Wankbewegung des Fahrzeugaufbaus entgegengewirkt wird.

Aus dem Stand der Technik sind mehrere Verfahren zur Herstellung derartiger geteilter Rohrstabilisatoren bekannt. So sind aus den Druckschriften DE 199 30 444 C2 und DE 199 36 541 C2 Verfahren bekannt, bei denen die drehfeste Verbindung zwischen den Rohrstabilisatorhälften und dem Schwenkmotor (Aktuator) über separate Kopplungsglieder realisiert wird. Bei den aus dieser Druckschrift bekannten Herstellungsverfahren sind somit zusätzliche Bauteile, nämlich die Kopplungsglieder, erforderlich.

Aus der DE 198 53 798 C1 ist es bekannt, aus Vollstäben bestehende Stabilisatorhälften mittels einer zusätzlichen Hülse verdrehfest miteinander zu verbinden. Hierzu weisen die miteinander zu verbindenden Stabilisatorhälften Außenverzahnungen auf, über die die Verbindungshülse aufgeschoben wird. Anschließend wird die Verbindungshülse plastisch verformt, so dass sich eine formschlüssige Verbindung zwischen der Hülse und den jeweiligen Stabilisatorhälften ergibt. Für diese Verbindungsart ist ebenfalls einzusätzliches Bauteil, nämlich die Hülse erforderlich.

Schließlich ist aus der DE 102 25 035 A1 bekannt, zwei aus Vollstäben bestehende Stabilisatorhälften über ein äußeres Drehteil drehfest miteinander zu verbinden. Dabei ist vorgesehen, dass das äußere Drehteil über eine Schweißnaht drehfest mit einer Stabilisatorhälfte verbunden ist. Die Schweißnaht hat dabei die Funktion, die innenliegenden Arbeitsräume des Aktuators nach außen druckdicht zu verschließen und die mit dem äußeren Drehteil verbundene Stabilisatorhälfte gegenüber dem äußeren Drehteil axial zu sichern. Das aus dieser Druckschrift bekannte Verfahren ist fertigungstechnisch vergleichsweise aufwendig und auf Rohrstabilisatoren nicht ohne weiteres übertragbar.

Der Erfindung liegt die Aufgabe zugrunde, ein Verfahren zum Herstellen eines geteilten Rohrstabilisators mit einem zwei Rohrstabilisatorhälften miteinander koppelnden Schwenkmotor anzugeben, bei dem gewichtsoptimierte Rohrstabilisatorhälften auf einfache Weise sicher an die Anschlussteile des Schwenkmotors drehfest angebunden werden können. Insbesondere soll die drehfeste Verbindung den Anforderungen gerecht werden, die aufgrund der im Einsatzfall gegebenen wechselnden Beanspruchung aufgrund wechselnder Torsionsrichtungen und sonstiger dynamischer Wechselbeanspruchungen vorliegen. Außerdem liegt der Erfindung die Aufgabe zugrunde, einen geteilten Rohrstabilisator mit Schwenkmotor anzugeben, der einfach aufgebaut ist und bei dem eine gewichtsoptimierte, den im Einsatzfall auftretenden Belastungen sicher gerecht werdende drehfeste Verbindung zwischen den Rohrstabilisatorhälften realisiert ist.

Hinsichtlich des Verfahrens wird diese Aufgabe durch ein Verfahren mit den Merkmalen des Patentanspruchs 1 gelöst. Vorteilhafte Weiterbildungen des Verfahrens sind in den Unteransprüchen 2 bis 10 angegeben.

Hinsichtlich des Rohrstabilisators wird diese Aufgabe durch einen geteilten Rohrstabilisator mit den Merkmalen des Patentanspruchs 11 gelöst. In den Unteransprüchen 12 bis 16 sind vorteilhafte Weiterbildungen des erfindungsgemäßen Rohrstabilisators angegeben.

Der Vorteil des erfindungsgemäßen Verfahrens besteht darin, dass eine direkte Anbindung der Rohrstabilisatorhälften an die Anschlussteile des Schwenkmotors möglich ist. Die stoffschlüssige Verbindung, welche insbesondere durch Schweißen (MAG-Schweißen, Laserstrahlschweißen) herstellbar ist, ist besonders geeignet für die wechselnde Beanspruchung dieser verdrehfesten Verbindung im Einsatz des Stabilisators.

Ein weiterer Vorteil besteht darin, dass das erfindungsgemäße Verfahren ohne zusätzliche Bauteile auskommt, mit denen die verdrehfeste Verbindung erst möglich wird.

In den aufgeweiteten und gestauchten Rohrenden, welche mit den Anschlussteilen des Schwenkmotors zu verbinden sind, liegt ein günstiger Faserverlauf im Werkstoff vor, weil bei dem erfindungsgemäßen Herstellverfahren keine spanende Bearbeitung der Rohrenden erfolgt.

Durch den Wegfall von zusätzlichen Hilfsfügeteilen, die durch formschlüssige Verbindungen mit den Stabilisatorhälften verbunden werden (wie dies aus dem Stand der Technik bekannt ist), ist es bei der Erfindung auch nicht erforderlich, die Stabilisatorhälften mit Verzahnungen zu versehen, die die formschlüssige Verbindung mit dem Hilfsfügeteil ermöglichen.

Das Weiten und Anstauchen der Rohrenden hat bei der Erfindung mehrere positive Effekte. Durch das radiale Aufweiten erfolgt eine Vergrößerung des Durchmessers, so dass sich das Flächenträgheitsmoment des Rohrendes erhöht. Gleichzeitig führt das Aufweiten zu einer Verringerung der Spannungen in der späteren Schweißnaht bzw. allgemein im späteren Fügebereich, weil sich aufgrund der Aufweitung eine größere Fläche einstellt, auf die sich die im Einsatzfall auftretenden Kräfte verteilen. Die im Einsatzfall auftretenden Spannungen sind somit deutlich geringer als im Falle von nicht aufgeweiteten Rohrenden. Auf diese Weise kann eine höhere Zeitstandfestigkeit der Verbindung erreicht werden.

Das axiale Stauchen des Rohrendes, welches erfindungsgemäß in einem Arbeitsschritt mit dem Aufweiten erfolgt, hat den Zweck, die Wanddicke des Rohrendes zu vergrößern. Dadurch kann eine stärkere und bessere Verbindung des Rohrendes mit den Anschlussteilen des Schwenkmotors erreicht werden.

Die erfolgreiche Anwendung der Erfindung ist grundsätzlich unabhängig davon, ob die Stabilisatoren über ihre Längserstreckung einen gleich bleibenden oder einen ungleichförmigen Durchmesser- und/oder Wanddickenverlauf aufweisen. In der Praxis werden häufig die die späteren Rohrstabilisatorhälften bildenden Rohrabschnitte in ihrem geraden Zustand einer oder mehreren lokalen Umformungen unterzogen, mit denen die Wanddicke und/oder der Durchmesser des geraden Rohrabschnittes an die Anforderungen des späteren Stabilisators angepasst werden. So wird in der Praxis häufig z.B. durch lokales Rundkneten der geraden Rohrabschnitte der gewünschte Wanddicken- und/oder Durchmesserverlauf über die Längserstreckung des Stabilisators erzeugt.

Die Anschlussteile des Schwenkmotors, mit denen die Enden der Rohrstabilisatorhälften stoffschlüssig verbunden werden, sind vorzugsweise als Wellen ausgebildet. Sowohl Vollwellen (also Wellen aus Vollmaterial) als auch Hohlwellen sind grundsätzlich in gleicher Weise geeignet. Sind die Anschlussteile als Hohlwellen ausgebildet, so ist hinsichtlich der Dimensionierung insbesondere der Wanddicke der Hohlwelle darauf zu achten, dass die erforderlichen Drehmomente sicher übertragen werden können.

In einer bevorzugten Ausführungsform der Erfindung ist um das Rohrende herum während des Aufweitens mit dem Dorn ein Matrizenwerkzeug angeordnet, dessen Innendurchmesser exakt dem gewünschten späteren Außendurchmesser des Rohrendes nach Aufweitung und Stauchung entspricht. Dieses Matrizenwerkzeug dient dem Kalibrieren des Rohraußendurchmessers und insbesondere der Rohrstirnfläche, so dass sich eine plane Ringfläche als Rohrstirnfläche ergibt. Vorzugsweise erfolgt dieser Schritt des Kalibrierens also bei der Erfindung wiederum im selben Arbeitsschritt wie das Aufweiten und das Stauchen.

Prinzipiell ist es möglich, das Aufweiten, Stauchen und Kalibrieren der Rohrenden im kalten Zustand, im halbwarmen Zustand oder im warmen Zustand durchzuführen. Bevorzugt wird das Umformen der Rohrenden im warmen Zustand, z. B. bei etwa 900°C. Will man auf die Notwendigkeit des Erwärmens der Rohrenden verzichten, so kann das Aufweiten und Stauchen ebenso wie das Kalibrieren der Rohrenden auch im kalten Zustand erfolgen. In diesem Fall sind die Werkzeuge und Maschinen entsprechend den größeren Kräften stärker auszulegen.

Der erfindungsgemäße Rohrstabilisator kommt ohne zusätzliche Kopplungselemente aus, weil die für den Anschluss der Rohrstabilisatorhälften ausgebildeten Enden integral aus dem Material der Rohrstabilisatorhälften selbst geformt sind. Daher ist der erfindungsgemäße Rohrstabilisator einfach im Aufbau und bei der Montage leicht zu handhaben. Durch das radiale Aufweiten des mit dem Anschlussteil des Schwenkmotors zu verbindenden Endes der jeweiligen Rohrstabilisatorhälfte wird eine größere Anschlussfläche erreicht, in der die im Einsatzfall auftretenden Spannungen reduziert sind. Die durch das gleichzeitig erfolgende axiale Stauchen erreichte Wanddickenvergrößerung trägt ebenfalls zu einer Vergrößerung der Fläche bei, die für die Aufnahme der auftretenden Kräfte zur Verfügung steht. Außerdem führt die im Bereich der Enden vergrößerte Wanddicke zu einer stoffschlüssigen Verbindung, die wesentlich belastbarer ist und eine höhere Zeitstandfestigkeit aufweist als dies ohne axiale Stauchung der Fall wäre.

Um das Gesamtgewicht des Rohrstabilisators zu optimieren, können einzelne Bereiche oder Abschnitte des Rohrstabilisators durch lokale Umformverfahren so bearbeitet sein, dass seine Wanddicke und/oder sein Durchmesser entsprechen den im Einsatzfall auftretenden Belastungen lokal reduziert ist. Um dies zu erreichen bietet sich beispielsweise das lokale Rundkneten als Umformverfahren an. Dieses Verfahren wird in an sich bekannter Weise an den geraden, die späteren Rohrstabilisatorhälften bildenden Rohrabschnitten ausgeführt.

Im Folgenden wird die Erfindung an Hand einer ein Ausführungsbeispiel darstellenden Zeichnung näher erläutert. Im Einzelnen zeigen
Figur 1a einen nach dem erfindungsgemäßen Verfahren hergestellten geteilten Rohrstabilisator mit Schwenkmotor;
Fig. 1b einen Rohrstabilisator mit Schwenkmotor, bei dem die Anschlussteile als Vollwellen ausgebildet sind;
Fig. 1c einen Rohrstabilisator mit Schwenkmotor, bei dem die Anschlussteile als Hohlwellen ausgebildet sind;
Figur 2 eine nach dem erfindungsgemäßen Verfahren hergestellte Rohrstabilisatorhälfte, bei dem das aufgeweitete und gestauchte Rohrende im Schnitt dargestellt ist;
Figur 3 den Arbeitsschritt des Aufweitens und Stauchens mit gleichzeitigem Kalibrierschritt in einer Schnittdarstellung.

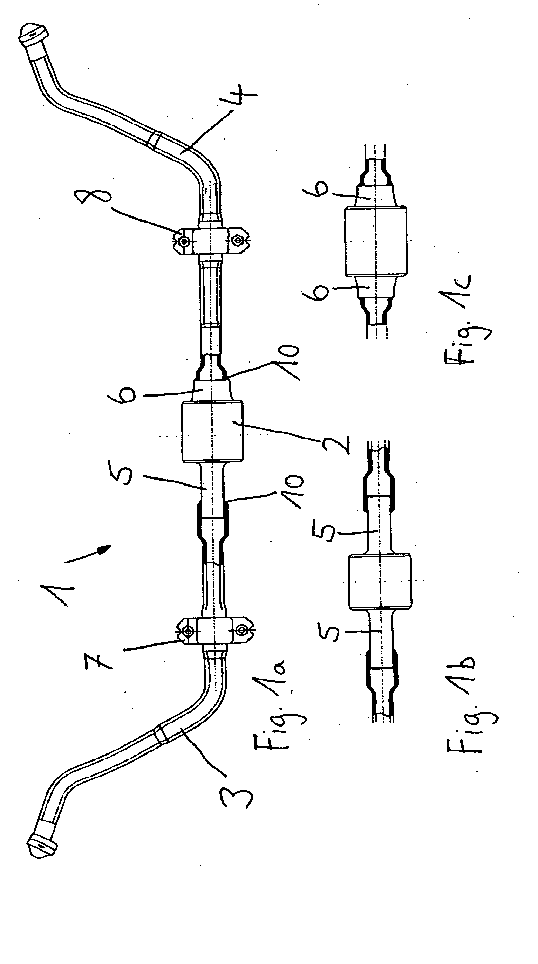

In Figur 1a ist ein nach dem erfindungsgemäßen Verfahren hergestellter geteilter Rohrstabilisator (1) mit Schwenkmotor (2) dargestellt. Die beiden Rohrstabilisatorhälften (3, 4) weisen an ihren dem Schwenkmotor (2) zugewandten Enden aufgeweitete und gestauchte Rohrenden auf, welche über Schweißnähte (10) mit den Anschlussteilen des Schwenkmotors (2), die hier als Wellen (5, 6) ausgebildet sind, drehfest verbunden sind. Die in Fig. 1a links dargestellte Welle (5) ist dabei als Vollwelle ausgebildet, während die rechte Welle (6) als Hohlwelle ausgebildet ist. Es versteht sich, dass die Anordnung der Wellen (5, 6) auch genau umgekehrt sein könnte.

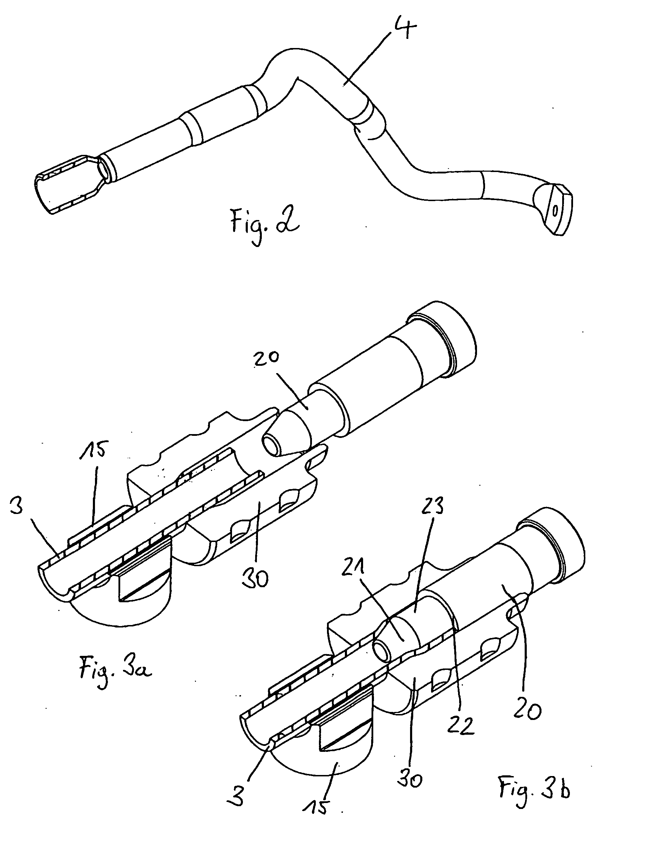

Über ihre Längserstreckung weisen die Rohrstabilisatorhälften (3, 4) Abschnitte mit unterschiedlichen Durchmessern und/oder mit reduzierter Wanddicke auf. Diese Abschnitte wurden z.B. durch Rundkneten an den noch nicht gebogenen geraden Rohrabschnitten erzeugt. Nach dem Rundkneten der geraden Rohrabschnitte wurden die mit den Wellen (5, 6) des Schwenkmotors (2) zu verbindenden Rohrenden aufgeweitet und gestaucht. Dieser Verfahrensschritt wird nachstehend noch genauer in Bezug auf die Figuren 3a und 3b erläutert.

Die in Figur 1a dargestellte räumliche Form der Rohrstabilisatorhälften (3, 4) wird durch Biegen in an sich bekannter Weise erzeugt. Ebenso werden die Abplattungen und Lochungen an den dem Schwenkmotor (2) abgewandten Enden der Rohrstabilisatorhälften (3, 4) in an sich bekannter Art und Weise erzeugt.

Weiterhin sind in Figur 1a Lagerungen (7, 8) dargestellt, mit denen der geteilte Rohrstabilisator an dem Fahrzeugaufbau befestigt werden kann.

Fig. 1b zeigt eine Ausführungsform des erfindungsgemäßen Rohrstabilisators, bei dem beide Anschlussteile (5) als Vollwellen ausgebildet sind, welche in die aufgeweiteten und gestauchten Enden der jeweiligen Rohrstabilisatorhälften eingesteckt und mit diesen stoffschlüssig verbunden sind. Im Unterschied dazu zeigt Fig. 1c eine Ausführungsform, bei der beide Anschlussteile (6) als Hohlwellen ausgebildet, in welche die aufgeweiteten und gestauchten Enden der jeweiligen Rohrstabilisatorhälften eingesteckt sind. Auch bei dieser Ausführungsform sind die Hohlwellen (6) stoffschlüssig mit den Rohrstabilisatorhälften verbunden.

Zum besseren Verständnis ist in Figur 2 die Rohrstabilisatorhälfte (4) aus Figur 1a ohne Schwenkmotor (2) und ohne Lagerung (8) dargestellt. Das aufgeweitete Rohrende, welches zur drehfesten Verbindung der Rohrstabilisatorhälfte (4) mit der in Figur 2 nicht dargestellten Welle (6) des Schwenkmotors (2) (vgl. Figur 1 a) dient, ist in Figur 2 im Schnitt dargestellt.

In den Figuren 3a und 3b ist der Verfahrensschritt des Aufweitens und Stauchens der Enden der Rohrstabilisatorhälften (3, 4) dargestellt. Hierbei ist in Figur 3 a die Situation vor dem Eindringen des Aufweitdorns (20) in das Rohrende dargestellt. In Figur 3b ist die Situation nach dem Aufweiten und Kalibrieren des Rohrendes dargestellt.

In Figur 3 a wird die Rohrstabilisatorhälfte (3) durch die Spannbacke (15) einer ansonsten nicht näher dargestellten Haltevorrichtung gehalten. Das Rohrende befindet sich in der inneren Bohrung eines Matrizenwerkzeuges (30). Der Dorn (20) ist in Bereitschaftsposition vor dem Rohrende der Rohrstabilisatorhälfte (3) angeordnet.

Um das Aufweiten und Stauchen mit gleichzeitigem Kalibrieren des Rohrendes zu erreichen, wird der Dorn (20) nun axial in das Rohrende hineingeschoben. Dabei weitet der Dorn (20) aufgrund seiner kegelförmigen Spitze (21) das Rohrende auf. In axialer Richtung von der kegelförmigen Spitze (21) zurückversetzt weist der Dorn (20) einen radialen Absatz (22) auf, gegen den sich der Werkstoff des Rohrendes abstützt, so dass das Rohrende zwischen der ortsfesten Spannbacke (15) und dem radialen Absatz (22) gestaucht wird. Dabei dickt sich das Material des Rohrendes in dem Bereich des zylindrischen Abschnitts (23) des Dorns (20) auf. Auf diese Weise wird die Wanddicke des aufgeweiteten Rohrendes erhöht.

Das Matrizenwerkzeug (30) weist einen definierten Innendurchmesser auf, so dass die Umfangsfläche des Rohrendes hinsichtlich des Durchmessers kalibriert wird. Gleichzeitig wird durch den radialen Absatz (22) auch die Stirnfläche des Rohrendes kalibriert, so dass sich eine exakt ebene Stirnfläche ergibt.

Der in den Figuren 3 a und 3 b dargestellte Aufweit-, Stauch- und Kalibriervorgang findet vorzugsweise im erwärmten Zustand, z. B. bei etwa 900°C statt.

### Bezugszeichenliste:

- 1: geteilter Rohrstabilisator
- 2: Schwenkmotor
- 3: Rohrstabilisatorhälfte
- 4: Rohrstabilisatorhälfte
- 5: Anschlussteil, Welle, Vollwelle
- 6: Anschlussteil, Welle, Hohlwelle
- 7: Lagerung
- 8: Lagerung
- 10: Schweißnaht
- 15: Spannbacke
- 20: Dorn
- 21: kegelförmige Spitze
- 22: radialer Absatz
- 23: zylindrischer Abschnitt
- 30: Matrizenwerkzeug

## Patentansprüche

1. Verfahren zum Herstellen eines geteilten Rohrstabilisators mit einem zwei Rohrstabilisatorhälften (3, 4) miteinander koppelnden Schwenkmotor (2), wobei eine erste Rohrstabilisatorhälfte (3) mit einem ersten Anschlussteil (5) des Schwenkmotors und eine zweite Stabilisatorhälfte (4) mit einem zweiten Anschlussteil (6) des Schwenkmotors (2) drehfest verbunden wird, **gekennzeichnet durch** folgende Verfahrensschritte:
a. Die mit den Anschlussteilen (5, 6) des Schwenkmotors (2) zu verbindenden Rohrenden werden mit einem Dorn (20) in einem Arbeitsschritt aufgeweitet und gestaucht;
b. Die Rohrstabilisatorhälften (3, 4) mit den aufgeweiteten und gestauchten Enden werden **durch** Biegen in ihre endgültige Form gebracht;
c. Die fertig gebogenen Rohrstabilisatorhälften (3, 4) werden einer Wärmebehandlung unterzogen;
d. Die aufgeweiteten und gestauchten Rohrenden der wärmebehandelten Rohrstabilisatorhälften (3, 4) werden stoffschlüssig mit den jeweiligen Anschlussteilen (5, 6) des Schwenkmotors (2) verbunden.

2. Verfahren nach Anspruch 1, **dadurch gekennzeichnet, dass** vor dem Aufweiten und Stauchen in gerade Rohrabschnitte, die die späteren Rohrstabilisatorhälften (3, 4) bilden, durch lokale Umformverfahren lokale Abschnitte mit reduziertem Durchmesser und/oder reduzierter Wanddicke eingebracht werden.

3. Verfahren nach Anspruch 1 oder 2, **dadurch gekennzeichnet, dass** die Anschlussteile des Schwenkmotors (2) als Wellen (5, 6) (Voll- oder Hohlwellen) ausgebildet sind.

4. Verfahren nach den Ansprüchen 1 bis 3, **dadurch gekennzeichnet, dass** die Rohrenden im erwärmten Zustand aufgeweitet und gestaucht werden.

5. Verfahren nach den Ansprüchen 1 bis 4, **dadurch gekennzeichnet, dass** die aufzuweitenden und zu stauchenden Rohrenden beim Einführen des Dorns (20) von einem Matrizenwerkzeug (30) zur in einem Arbeitsschritt mit dem Aufweiten und Stauchen erfolgenden Kalibrierung der Rohrenden umgeben sind.

6. Verfahren nach den Ansprüchen 1 bis 5, **dadurch gekennzeichnet, dass** das Aufweiten und Stauchen der Rohrenden in mehreren Stufen erfolgt.

7. Verfahren nach den Ansprüchen 1 bis 6, **dadurch gekennzeichnet, dass** die nicht mit dem Schwenkmotor (2) zu verbindenden Enden der Rohrstabilisatorhälften (3, 4) geplättet und gelocht werden, bevor die Rohrstabilisatorhälften (3, 4) mit den Anschlussteilen (5, 6) des Schwenkmotors (2) stoffschlüssig verbunden werden.

8. Verfahren nach den Ansprüchen 1 bis 7, **dadurch gekennzeichnet, dass** die stoffschlüssige Verbindung der Rohrstabilisatorhälften (3, 4) mit den Anschlussteilen (5, 6) des Schwenkmotors (2) durch Schweißen erfolgt.

9. Verfahren nach Anspruch 8, **dadurch gekennzeichnet, dass** als Schweißverfahren das MAG-Schweißen oder das Laserstrahlschweißen eingesetzt wird.

10. Verfahren nach den Ansprüchen 1 bis 9, **dadurch gekennzeichnet, dass** die Rohrstabilisatorhälften (3, 4) vor dem stoffschlüssigen Verbinden mit den Anschlussteilen (5, 6) des Schwenkmotors (2) lackiert werden.

11. Geteilter Rohrstabilisator mit einem zwei Rohrstabilisatorhälften (3, 4) miteinander koppelnden Schwenkmotor (2), wobei eine erste Rohrstabilisatorhälfte (3) mit einem ersten Anschlussteil (5, 6) des Schwenkmotors (2) und eine zweite Rohrstabilisatorhälfte (4) mit einem zweiten Anschlussteil (6, 5) des Schwenkmotors (2) stoffschlüssig verbunden ist, **dadurch gekennzeichnet, dass** die mit den Anschlussteilen (5, 6) stoffschlüssig verbundenen Enden der Rohrstabilisatorhälften (3, 4) als aufgeweitete und gestauchte Enden ausgebildet sind, welche aus dem Material der Rohrstabilisatorhälften selbst als deren integraler Bestandteil durch ein in einem Arbeitsschritt erfolgendes Aufweiten und Stauchen der Rohrenden gebildet sind.

12. Rohrstabilisator nach Anspruch 11, **dadurch gekennzeichnet, dass** er über seine Längserstreckung lokale Abschnitte unterschiedlicher Wanddicke und/oder unterschiedlichen Durchmessers aufweist, welche durch lokale Umformungen erzeugt sind.

13. Rohrstabilisator nach Anspruch 11 oder 12, **dadurch gekennzeichnet, dass** die Anschlussteile des Schwenkmotors (2) als Wellen (5, 6) (Vollwellen oder Hohlwellen) ausgebildet sind.

14. Rohrstabilisator nach Anspruch 13, **dadurch gekennzeichnet, dass** der Innendurchmesser der aufgeweiteten und gestauchten Enden der Rohrstabilisatorhälften (3, 4) größer ist als der Außendurchmesser der jeweiligen mit dem Ende stoffschlüssig verbundenen Welle (5), wobei die stoffschlüssige Verbindung als Schweißnaht (10) ausgebildet ist.

15. Rohrstabilisator nach Anspruch 13, **dadurch gekennzeichnet, dass** der Außendurchmesser der aufgeweiteten und gestauchten Enden der Rohrstabilisatorhälften (3, 4) kleiner ist als der Innendurchmesser der jeweiligen mit dem Ende stoffschlüssig verbundenen Hohlwelle (6), wobei die stoffschlüssige Verbindung als Schweißnaht (10) ausgebildet ist.

16. Rohrstabilisator nach Anspruch 14 oder 15, **dadurch gekennzeichnet, dass** die Schweißnaht (10) als Kehlnaht ausgebildet ist.

17. Rohrstabilisator nach Anspruch 14 bis 16, **dadurch gekennzeichnet, dass** die Schweißnaht (10) als Laserschweißnaht oder MAG-Schweißnaht ausgebildet ist.

## Claims

1. Method of producing a divided tube stabiliser having a swivel motor (2), which couples two tube stabiliser halves (3, 4) to each other, wherein a first tube stabiliser half (3) is connected in a rotationally fixed manner to a first connection part (5) of the swivel motor, and a second stabiliser half (4) is connected in a rotationally fixed manner to a second connection part (6) of the swivel motor (2), **characterised by** the following method steps:
a. the tube ends to be connected to the connection parts (5, 6) of the swivel motor (2) are expanded and upset in one operating step by means of a mandrel (20);
b. the tube stabiliser halves (3, 4) having the expanded and upset ends are made into their final shape by bending;
c. the finished bent tube stabiliser halves (3, 4) are subjected to a heat treatment;
d. the expanded and upset tube ends of the heat-treated tube stabiliser halves (3, 4) are connected in a firmly bonded manner to the respective connection parts (5, 6) of the swivel motor (2).

2. Method as claimed in claim 1, **characterised in that**, prior to the expansion and upsetting procedures, local sections having a reduced diameter and/or a reduced wall thickness are introduced by means of local deformation methods into straight tube sections which form the subsequent tube stabiliser halves (3, 4).

3. Method as claimed in claim 1 or 2, **characterised in that** the connection parts of the swivel motor (2) are formed as shafts (5, 6) (solid or hollow shafts).

4. Method as claimed in claims 1 to 3, **characterised in that** the tube ends are expanded and upset in the heated state.

5. Method as claimed in claims 1 to 4, **characterised in that** upon introduction of the mandrel (20), the tube ends to be expanded and upset are surrounded by a die tool (30) for the purpose of calibrating the tube ends which is performed in one operating step with the expansion and upsetting procedures.

6. Method as claimed in claims 1 to 5, **characterised in that** the tube ends are expanded and upset in several steps.

7. Method as claimed in claims 1 to 6, **characterised in that** the ends of the tube stabiliser halves (3, 4) which are not to be connected to the swivel motor (2) are flattened and perforated before the tube stabiliser halves (3, 4) are connected in a firmly bonded manner to the connection parts (5, 6) of the swivel motor (2).

8. Method as claimed in claims 1 to 7, **characterised in that** the tube stabiliser halves (3, 4) are connected in a firmly bonded manner to the connection parts (5, 6) of the swivel motor (2) by welding.

9. Method as claimed in claim 8, **characterised in that** MAG welding or laser beam welding is used as the welding method.

10. Method as claimed in claims 1 to 9, **characterised in that** the tube stabiliser halves (3, 4) are lacquered prior to being connected in a firmly bonded manner to the connection parts (5, 6) of the swivel motor (2).

11. Divided tube stabiliser having a swivel motor (2), which couples two tube stabiliser halves (3, 4) to each other, wherein a first tube stabiliser half (3) is connected in a firmly bonded manner to a first connection part (5, 6) of the swivel motor (2) and a second tube stabiliser half (4) is connected in a firmly bonded manner to a second connection part (6, 5) of the swivel motor (2), **characterised in that** the ends of the tube stabiliser halves (3, 4) which are connected in a firmly bonded manner to the connection parts (5, 6) are formed as expanded and upset ends which are formed from the material of the tube stabiliser halves themselves as their integral component by means of an expansion and upsetting of the tube ends which is performed in one operating step.

12. Tube stabiliser as claimed in claim 11, **characterised in that** over its longitudinal extension it comprises local sections of a different wall thickness and/or of a different diameter which are produced by local deformations.

13. Tube stabiliser as claimed in claim 11 or 12, **characterised in that** the connection parts of the swivel motor (2) are formed as shafts (5, 6) (solid shafts or hollow shafts).

14. Tube stabiliser as claimed in claim 13, **characterised in that** the inner diameter of the expanded and upset ends of the tube stabiliser halves (3, 4) is greater than the outer diameter of the respective shaft (5) which is connected in a firmly bonded manner to the end, wherein the firmly bonded connection is formed as a weld seam (10).

15. Tube stabiliser as claimed in claim 13, **characterised in that** the outer diameter of the expanded and upset ends of the tube stabiliser halves (3, 4) is smaller than the inner diameter of the respective hollow shaft (6) which is connected in a firmly bonded manner to the end, wherein the firmly bonded connection is formed as a weld seam (10).

16. Tube stabiliser as claimed in claim 14 or 15, **characterised in that** the weld seam (10) is formed as a fillet weld.

17. Tube stabiliser as claimed in claim 14 to 16, **characterised in that** the weld seam (10) is formed as a laser weld seam or as a MAG weld seam.

## Revendications

1. Procédé de fabrication d'un stabilisateur tubulaire divisé, doté d'un moteur pivotant (2), qui couple ensemble deux moitiés de stabilisateur tubulaire (3, 4), sachant qu'une première moitié de stabilisateur tubulaire (3) est reliée solidaire en rotation à une première pièce de raccordement (5) du moteur pivotant et qu'une deuxième moitié de stabilisateur tubulaire (4) est reliée solidaire en rotation à une deuxième pièce de raccordement (6) du moteur pivotant (2), **caractérisé par** les étapes suivantes:
a. les extrémités du tube à relier aux pièces de raccordement (5, 6) moteur pivotant (2) sont élargies avec un mandrin (20) et refoulées en une phase de travail ;
b. les moitiés de stabilisateur tubulaire (3, 4) présentant les extrémités élargies et refoulées sont mises à leur forme définitive par cintrage ;
c. les moitiés de stabilisateur tubulaire (3, 4) cintrées sont soumises à un traitement thermique ;
d. les extrémités de tube élargies et refoulées des moitiés de stabilisateur tubulaire (3, 4) traitées à chaud sont respectivement reliées aux pièces de raccordement (5, 6) du moteur pivotant (2) par liaison de matière.

2. Procédé selon la revendication 1, **caractérisé en ce que**, avant l'élargissement et le refoulage, des sections locales de diamètre réduit et / ou d'épaisseur de paroi réduite sont insérées par modification de la forme dans des sections de tube droites, qui forment les futurs moitiés de stabilisateur tubulaire (3, 4).

3. Procédé selon revendication 1 ou 2, **caractérisé en ce que** les pièces de raccordement du moteur pivotant (2) sont réalisées sous la forme d'arbres (5, 6) (arbres pleins ou creux).

4. Procédé selon l'une des revendications 1 à 3, **caractérisé en ce que** les extrémités du tube sont élargies et refoulées à l'état chauffé.

5. Procédé selon l'une des revendications 1 à 4, **caractérisé en ce que** les extrémités du tube devant être élargies et refoulées sont entourées, lors de l'introduction du mandrin (20), d'un outil à matricer (30), pour le calibrage desdites extrémités de tube, qui est exécuté avec l'élargissement et le refoulage en une phase de travail.

6. Procédé selon l'une des revendications 1 à 5, **caractérisé en ce que** l'élargissement et le refoulage des extrémités du tube sont effectués à plusieurs niveaux.

7. Procédé selon l'une des revendications 1 à 6, **caractérisé en ce que** les extrémités des moitiés de stabilisateur tubulaire (3, 4) ne devant pas être reliées au moteur pivotant (2) sont aplaties et perforées avant que les moitiés de stabilisateur tubulaire (3, 4) soient reliées aux pièces de raccordement (5, 6) du moteur pivotant (2) par liaison de matière.

8. Procédé selon l'une des revendications 1 à 7, **caractérisé en ce que** l'assemblage des moitiés de stabilisateur tubulaire (3, 4) et des pièces de raccordement (5, 6) du moteur pivotant (2) par liaison de matière est effectué par soudage.

9. Procédé selon la revendication 8, **caractérisé en ce que** le procédé de soudage mis en oeuvre est le soudage à l'arc sous atmosphère de gaz actifs (MAG) ou le soudage au laser.

10. Procédé selon l'une des revendications 1 à 9, **caractérisé en ce que** les moitiés de stabilisateur tubulaire (3, 4) sont laquées avant d'être reliées aux pièces de raccordement (5, 6) du moteur pivotant (2) par liaison de matière.

11. Stabilisateur tubulaire divisé, doté d'un moteur pivotant (2), qui couple ensemble deux moitiés de stabilisateur tubulaire (3, 4), sachant qu'une première moitié de stabilisateur tubulaire (3) est reliée par liaison de matière à une première pièce de raccordement (5, 6) du moteur pivotant (2) et qu'une deuxième moitié de stabilisateur tubulaire (4) est reliée par liaison de matière à une deuxième pièce de raccordement (6, 5) du moteur pivotant (2), **caractérisé en ce que** les extrémités des moitiés de stabilisateur tubulaire (3, 4), reliées aux pièces de raccordement (5, 6) par liaison de matière, sont des extrémités élargies et refoulées, qui sont formées à partir de la matière des moitiés de stabilisateur tubulaire en tant que composant intégral, par élargissement et refoulage effectués au cours d'une phase de travail.

12. Stabilisateur tubulaire selon la revendication 11, **caractérisé en ce qu'**il présente sur sa dimension longitudinale des sections locales d'épaisseur de paroi différente et / ou de diamètre différent, qui sont réalisées par modification de la forme.

13. Stabilisateur tubulaire selon revendication 11 ou 12, **caractérisé en ce que** les pièces de raccordement du moteur pivotant (2) sont réalisées en tant qu'arbres (5, 6) (arbres pleins ou creux).

14. Stabilisateur tubulaire selon la revendication 13, **caractérisé en ce que** le diamètre intérieur des extrémités élargies et refoulées des moitiés de stabilisateur tubulaire (3, 4) est plus grand que le diamètre extérieur de l'arbre (5) respectivement relié par liaison de matière à l'extrémité correspondante, la liaison de matière étant réalisée sous la forme d'un cordon de soudure (10).

15. Stabilisateur tubulaire selon la revendication 13, **caractérisé en ce que** le diamètre extérieur des extrémités élargies et refoulées des moitiés de stabilisateur tubulaire (3, 4) est plus petit que le diamètre intérieur de l'arbre creux (6) respectivement relié par liaison de matière à l'extrémité correspondante, la liaison de matière étant réalisée sous la forme d'un cordon de soudure (10).

16. Stabilisateur tubulaire selon revendication 14 ou 15, **caractérisé en ce que** le cordon de soudure (10) est réalisé en tant que soudure d'angle.

17. Stabilisateur tubulaire selon l'une des revendications 14 à 16, **caractérisé en ce que** le cordon de soudure (10) est exécuté en tant que cordon de soudure au laser ou cordon de soudure à l'arc sous atmosphère de gaz actifs (MAG).
